(19) Europäisches Patentamt
European Patent Office
Office européen des brevets

(11) EP 0 665 243 B1

(12) EUROPEAN PATENT SPECIFICATION

(45) Date of publication and mention of the grant of the patent:
**07.07.1999 Bulletin 1999/27**

(51) Int Cl.6: **C08F 10/00**, C07F 7/18, C08F 4/646

(21) Application number: **95101305.1**

(22) Date of filing: **31.01.1995**

# (54) Catalyst for polymerization of olefins and process for polymerization of olefins using the same

Katalysator für Olefinpolymerisation und Verfahren zur Olefinpolymerisation unter Anwendung desselben

Catalyseur pour la polymérisation d'oléfines et procédé de polymérisation utilisant celui-ci

(84) Designated Contracting States:
**AT BE DE ES FR GB IT NL PT**

(30) Priority: **28.04.1994 JP 11375494**
**18.11.1994 JP 30996294**
**19.05.1994 JP 12959494**
**31.01.1994 JP 2734494**
**23.06.1994 JP 16449594**
**23.06.1994 JP 16449694**

(43) Date of publication of application:
**02.08.1995 Bulletin 1995/31**

(60) Divisional application: **97101378.4 / 0 773 240**
**97101387.5 / 0 773 241**

(73) Proprietor: **TOHO TITANIUM CO., LTD.**
**Chigasaki-shi, Kanagawa 253 (JP)**

(72) Inventors:
- **Hosaka, Motoki**
  **Chigasaki-city, Kanagawa (JP)**
- **Goto, Kenji**
  **Chigasaki-city, Kanagawa (JP)**
- **Matsuo, Masahiko**
  **Koza-gun, Kanagawa (JP)**
- **Kataoka, Takuo**
  **Chigasaki-city, Kanagawa (JP)**
- **Masuyama, Takahiro**
  **Koza-gun, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 032 294**
**EP-A- 0 093 494**
**EP-A- 0 171 155**
**EP-A- 0 350 170**
**EP-A- 0 537 858**
**EP-A- 0 576 411**
**US-A- 5 034 361**

- **DATABASE WPI Derwent Publications Ltd., London, GB; AN an94-197145 & JP-A-06 136 051 (TOHO TITANIUM CO) , 17 May 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 665 243 B1

## Description

### FIELD OF THE INVENTION

This invention relates to an organosilicon compound, a Ziegler-Natta catalyst containing the same and a catalyst for polymerization of olefins. More particularly, it relates to a catalyst for polymerization of olefins with which an olefin polymer having high stereoregularity (extremely high crystallinity) and broad molecular weight distribution can be obtained in high yield.

### BACKGROUND OF THE INVENTION

Hitherto, a large number of specific organosilicon compounds for use as an electron donor (external electron donor) as a component of a Ziegler-Natta catalyst or for use as an electron donor (internal electron donor) contained in a solid catalyst component of a Ziegler-Natta catalyst have been proposed for the purpose of producing polymers having improved stereoregularity or enhancing catalytic activity in olefin polymerization using the catalyst.

Various proposals have been made on processes for producing this kind of organosilicon compounds. For example, U.S. Patent 4,977,291 proposes a process for producing a silicon compound having at least one cycloalkyl group in which a silicon compound containing an aromatic group as a starting compound is hydrogenated in the presence of a catalyst, e.g., a Raney nickel catalyst.

U.S. Patent 4,958,041 discloses a process for producing a diorganodialkoxysilane having at least one branched alkyl group other than the two alkoxy groups in which a tetraalkoxysilane or a monoorganotrialkoxysilane is reacted with a Grignard reagent having the structural formula RMgX wherein R is an alkyl group or a cycloalkyl group and X is a halogen atom.

In JP-A-5-255350 is disclosed a cycloalkoxysilane represented by the formula $(R'O)_x(R')_ySi(OR)_{4-x-y}$ for use as an electron donor component of a Ziegler-Natta catalyst for olefin polymerization, wherein each R is independently selected from alkyl groups having 1 to 5 carbon atoms and acyl groups having 2 to 5 carbon atoms, each R' is independently selected from a cyclopentyl group, a cyclohexyl group, a cycloheptyl group, and substituted groups thereof, x is 1, 2, 3, or 4, and y is 0, 1, or 2. The term "JP-A" as used herein means an "unexamined published Japanese patent application." JP-A-5-310757 discloses tert-butoxycyclopentyldiethoxysilane as a novel silane compound and a process for producing the same.

For homo- or copolymerization of olefins a number of processes using a catalyst system comprising a solid catalyst component essentially containing magnesium, titanium, an electron donor compound, and a halogen, an organoaluminum compound, and an organosilicon compound have been proposed.

For example, JP-A-57-63310 and JP-A-57-63311 propose a process for polymerizing an olefin having 3 or more carbon atoms using a catalyst system comprising (a) a solid catalyst component containing a magnesium compound, a titanium compound and an internal electron donor, (b) an organoaluminum compound, and (c) an organosilicon compound having an Si-O-C bond. However, these processes are not always satisfactory for obtaining highly stereoregular polymers in high yield, and further improvement has been demanded.

On the other hand, JP-A-63-3010 discloses a catalyst system for the polymerization of olefins and a process for polymerizing olefins using the same, the catalyst system comprising (a) a solid catalyst component prepared by bringing a dialkoxymagnesium, an diester of aromatic dicarboxylic acid, an aromatic hydrocarbon, and a titanium halide into contact and subjecting the resulting product in a powdered state to a heat treatment, (b) an organoaluminum compound, and (c) an organosilicon compound.

JP-A-1-315406 discloses a catalyst system for olefin polymerization and a process for polymerizing an olefin using the same, the catalyst system comprising (a) a solid catalyst component prepared by bringing titanium tetrachloride into contact with a suspension of diethoxymagnesium in an alkylbenzene, adding phthalic acid dichloride thereto to react to obtain a solid product, and further contacting the resulting solid product with titanium tetrachloride in the presence of an alkylbenzene, (b) an organoaluminum compound, and (c) an organosilicon compound.

JP-A-2-84404 proposes a catalyst system for the polymerization of olefins and a process for homo- or copolymerizing an olefin(s) using the same, the catalyst system comprising (a) a solid titanium catalyst component essentially containing magnesium, titanium and a halogen which is prepared by bringing a magnesium compound and a titanium compound into contact. (b) an organoaluminum compound catalyst component, and (c) an organosilicon compound catalyst component containing a cyclopentyl group or a derivative thereof, a cyclopentenyl group or a derivative thereof, or a cyclopentadienyl group or a derivative thereof.

Each of these known techniques aims at such high catalytic activity that a step of removing residual catalyst components, such as chlorine and titanium, from the resulting polymer (a so-called de-ashing step) may be omitted and, at the same time, an improvement in yield of a stereoregular polymer or an improvement in durability of the catalytic activity for polymerization, and has achieved excellent results to their purpose.

EP 0 576 411 A1 discloses olefin polymerization and copolymerization systems that include the combination of a conventional Ziegler-Natta catalyst component (and organoaluminum compound) with an electron donor. EP 0 576 411 A1 discloses that an organosilicon compound represented by $R_1R_4Si(OR_2)(OR_3)$ is used as the electron donor for the above polymerization systems. In the formula, $R_1$ represents an alkyl or cycloalkyl group containing a primary or secondary carbon attached to a silicon atom. Specific examples thereof include a secondary alkyl or cycloalkyl group having 3 or 5 carbon atoms having mirror image symmetry group. Further, specific examples thereof include an isopropyl group or a cyclopentyl group. In the formula, $R_4$ similarly represents an alkyl or cycloalkyl group containing a primary or secondary carbon attached to a silicon atom. Specific examples thereof include a secondary alkyl or cycloalkyl group having 1 to 6 carbon atoms having mirror image symmetry group. More specific examples thereof include an isopropyl group, a cyclopentyl group or a cyclohexyl group. In the formula, $R_2$ and $R_3$ each independently represents an alkyl group or an aryl group. Specific examples thereof include a methyl group, an ethyl group, a propyl group, and a butyl group. Specific examples of the electron donor as represented by the above formula include three compounds consisting of diisopropyldimethoxysilane (DIDS), dicyclopentyldimethoxysilane (CPDS), and cyclohexylisopropyldimethoxysilane (CIDS). EP 0 576 411 A1 discloses that in the polymerization systems as described above, in particular, in the polymerization of propylene, the catalyst efficiency is improved (30 kg/g-cat.·h or more), and a polymer containing less xylene solubles as a criterion of stereo-regularity can be obtained. Further, EP 0 576 411 A1 discloses that in the polymerization systems, a higher molecular weight polymer can be obtained.

An organosilicon compound according to the present invention or an organosilicon compound used as an electron donor in an olefin polymerization catalyst according to the present invention corresponds to a compound represented by a general formula for an electron donor as disclosed in EP 0 576 411 A1, when in the general formula, $R_1$ represents a cyclopentyl group and $R_4$ represents a cyclohexyl group. However, EP 0 576 411 A1 neither describes nor suggests a non-symmetrical organosilicon compound having cycloalkyl groups different in carbon atoms thereof from each other, that is, a cyclopentyl group and a cyclohexyl group, that is different from the present invention. Furthermore, the objects/effects of the present invention are to provide a polymer having high stereoregularity and broad molecular weight distribution in high yield by using, as an electron donor of an olefin copolymerization catalyst, the above-mentioned non-symmetrical organosilicon compound having cycloalkyl groups different from each other. EP 0 576 411 A1 neither discloses nor suggests the effects. Accordingly, EP 0 576 411 A1 does not disclose a specific organosilicon compound as described in the present invention, and neither discloses nor suggests that a polymer having broad molecular weight distribution can be obtained by using, as an electron donor, the compound.

In recent years, however, it has been pointed out that the olefin polymers obtained by polymerization using these catalyst systems comprising such a highly active catalyst component, an organoaluminum compound and an organosilicon compound have narrower molecular weight distribution as compared with those obtained by using conventional catalyst systems comprising a titanium trichloride type catalyst component in combination with an organoaluminum compound and, if desired, an electron donor compound as a third component. For polyolefins to have narrower molecular weight distribution means poorer moldability, leading to less applicability.

Various manipulations have been suggested to solve this problem. For example, adoption of a multi-stage polymerization system has been proposed for obtaining polyolefins with broader molecular weight distribution. Nevertheless, a multi-stage polymerization system requires repetition of tedious and complicated operation of polymerization and also involves a step for recovery of a chelating agent to be used for polymerization and is not therefore deemed to be favorable from the considerations of labor and cost.

As the latest technique, JP-A-3-7703 discloses a process for polymerizing an olefin in the presence of a catalyst system comprising (a) a solid titanium catalyst component essentially containing magnesium, titanium, a halogen, and an internal electron donor, (b) an organoaluminum compound, and (c) at least two organosilicon compounds as an external electron donor. According to this process, a polyolefin having broad molecular weight distribution can be obtained without involving laborious multi-stage polymerization operation. However, the use of at least two organosilicon compounds as an electron donor for polymerization makes the process still tedious and complicated.

## SUMMARY OF THE INVENTION

An object of the present invention is to provide a catalyst for the polymerization of olefins which can eliminate the above-mentioned problems associated with the conventional techniques, i.e., a catalyst system which exhibits high polymerization activity through simpler operation and provides an olefin polymer having broad molecular weight distribution while maintaining a satisfactory yield of a highly stereoregular polymer.

Another object of the present invention is to provide an organosilicon compound.

Still another object of the present invention is to provide a Ziegler-Natta catalyst containing the organosilicon compound.

As a result of extensive investigations, the present inventors have found that the above objects of the present invention has been attained by the following means. The present invention has been completed based on this finding.

(1) An organosilicon compound represented by formula (I)

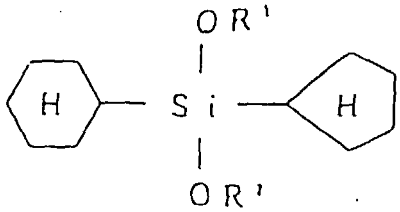

(I)

wherein $R^1$ and $R^2$, which may be the same or different, each represents an alkyl group having 1 to 3 carbon atoms, and the cyclohexyl group and the cyclopentyl group may be substituted.

(2) A Ziegler-Natta catalyst for olefin polymerization, containing as an external and/or internal electron donor ingredient the organosilicon compound as described in (1) above.

(3) The catalyst as described in (2) above, comprising (A) a solid catalyst component essentially containing magnesium, titanium, an electron donor compound, and a halogen which is prepared by bringing a magnesium compound, a titanium halide compound, and an electron donor compound into contact, (B) an organoaluminum compound, and (C) the organosilicon compound as described in (1) above.

(4) The organosilicon compound as described in (1) above, which is cyclohexylcyclopentyldimethoxysilane, cyclohexylcyclopentyldiethoxysilane,cyclohexylcyclopentyldi-n-propoxysilane, or cyclohexylcyclopentyldiisopropoxysilane.

(5) A process for polymerizing an olefin, comprising homo- or copolymerizing an olefin in the presence of the catalyst as described in (3).

## BRIEF DESCRIPTION OF THE DRAWINGS

Fig. 1 is a chart showing the results of MS with which cyclohexylcyclopentyldimethoxysilane was identified.

Fig. 2 is a chart showing the results of two-dimensional analysis by $^1H$-NMR/$^{13}C$-NMR (COSY spectrum) with which cyclohexylcyclopentyldimethoxysilane was identified.

Fig. 3 is a chart showing the results of IR with which cyclohexylcyclopentyldimethoxysilane was identified.

## DETAILED DESCRIPTION OF THE INVENTION

Organosilicon compound (C) which can be used in the present invention is an asymmetric organosilicon compound having a cyclohexyl group or a derivative thereof and a cyclopentyl group or a derivative thereof both directly bonded to the silicon atom. The cyclohexyl group and the cyclopentyl group may be substituted with an alkyl group preferably having 1 to 3 carbon atoms or a halogen atom. The number of substituent on each ring is preferably not more than two.

Examples of the alkyl group for $R^1$ and $R^2$ in formula (I) include methyl, ethyl, n-propyl, and isopropyl. Of these, methyl and ethyl are preferred.

The organosilicon compound of the present invention, which is represented by formula (I) described above, is a cyclohexylcyclopentyldialkoxysilane. Examples of the cyclohexylcyclopentyldialkoxysilane include cyclohexylcyclopentyldimethoxysilane, cyclohexylcyclopentyldiethoxysilane, cyclohexylcyclopentyldin-propoxysilane, and cyclohexylcyclopentyldiisopropoxysilane. Of these, cyclohexylcyclopentyldimethoxysilane and cyclohexylcyclopentyldiethoxysilane are preferred organosilicon compounds for use as an electron donor serving as a component of an olefin polymerization catalyst.

Various derivatives of these asymmetric organosilicon compounds are included within the scope of formula (I). In particular, those having one or two substituents, such as a methyl group, chlorine or bromine, at the 3-, 4- or 5-position of the cyclohexyl group thereof and/or one or two substituents as exemplified above at the 2-, 3- or 5-position of the cyclopentyl group thereof are preferred. Two substituents may be at the same position of the cyclohexyl or cyclopentyl group. Plurality of the substituents on the same ring may be the same or different.

Specific examples of the derivatives of the asymmetric organosilicon compounds are 3-clohexylcyclopentyldimethoxysilane, 3-methylcyclohexylcyclopentyldiethoxysilane, 3-methylcyclohexylcyclopentyldipropoxysilane, 4-methylcyclohexylcyclopentyldimethoxysilane, 4-methylcyclohexylcyclopentyldiethoxysilane, 4-methylcyclohexylcyclopentyldipropoxysilane, 3,5-dimethylcyclohexylcyclopentyldimethoxysilane, 3,5-dimethylcyclohexylcyclopentyldiethoxysilane, 3,5-dimethylcyclohexylcyclopentyldipropoxysilane, 3,3-dimethylcyclohexylcyclopentyldimethoxysilane, 4,4-dimethylcyclohexylcyclopentyldimethoxysilane, cyclohexyl-2-methylcyclopentyldimethoxysilane, cyclohexyl-2-methylcyclopentyldiethoxysilane, cyclohexyl2-methylcyclopentyldipropoxysilane,3-methylcyclohexyl-2-methylcyclopentyldimethoxysilane, 3-methylcyclohexyl-2-methylcyclopentyldiethoxysilane, 3-methylcyclohexyl-2-methylcyclopentyldipropoxysilane, 4-methylcyclohexyl-2-methylcyclopentyldimethoxysilane, 4-methylcyclohexyl-2-methylcyclopentyldiethoxysilane, 4-methylcyclohexyl-2-methylcyclopentyldipropoxysilane, 3,5-dimethylcyclohexyl-2-methylcyclopentyldimethoxysilane, 3,5-dimethylcyclohexyl-2-methylcyclopentyldiethoxysilane, 3,5-dimethylcyclohexyl-2-methylcyclopentyldipropoxysilane, 3,3-dimethylcyclohexyl-2-methylcyclopentyldimethoxysilane, 4,4-dimethylcyclohexyl-2-methylcyclopentyldimethoxysilane, cyclohexyl-3-methylcyclopentyldimethoxysilane, cyclohexyl-3-methylcyclopentyldimethoxysilane, cyclohexyl-3-methylcyclopentyldipropoxysilane,3-methylcyclohexyl-3-methylcyclopentyldimethoxysilane, 3-methylcyclohexyl-3-methylcyclopentyldiethoxysilane, 3-methylcyclohexyl-3-methylcyclopentyldipropoxysilane, 4-methylcyclohexyl-3-methylcyclopentyldimethoxysilane, 4-methylcyclohexyl-3-methylcyclopentyldiethoxysilane, 4-methylcyclohexyl-3-methylcyclopentyldipropoxysilane, 3,5-dimethylcyclohexyl-3-methylcyclopentyldimethoxysilane, 3,5-dimethylcyclohexyl-3-methylcyclopentyldiethoxysilane, 3,5-dimethylcyclohexyl-3-methylcyclopentyldipropoxysilane, 3,3-dimethylcyclohexyl-3-methylcyclopentyldimethoxysilane, 4,4-dimethylcyclohexyl-3-methylcyclopentyldimethoxysilane, cyclohexyl-2,3-dimethylcyclopentyldimethoxysilane, cyclohexyl-2,3-dimethylcyclopentyldiethoxysilane, cyclohexyl-2,3-dimethylcyclopentyldipropoxysilane, 3-methylcyclohexyl-2,3-dimethylcyclopentyldimethoxysilane, 3-methylcyclohexyl-2,3-dimethylcyclopentyldiethoxysilane, 3-methylcyclohexyl-2,3-dimethylcyclopentyldipropoxysilane, 4-methylcyclohexyl-2,3-dimethylcyclopentyldimethoxysilane, 4-methylcyclohexyl-2,3-dimethylcyclopentyldiethoxysilane, 4-methylcyclohexyl-2,3-dimethylcyclopentyldipropoxysilane, 3,5-dimethylcyclohexyl-2,3-dimethylcyclopentyldimethoxysilane, 3,5-dimethylcyclohexyl-2,3-dimethylcyclopentyldiethoxysilane, 3,5-dimethylcyclohexyl-2,3-dimethylcyclopentyldipropoxysilane, 3,3-dimethylcyclohexyl-2,3-dimethylcyclopentyldimethoxysilane, 4,4-dimethylcyclohexyl-2,3-dimethylcyclopentyldimethoxysilane, cyclohexyl-2,5-dimethylcyclopentyldimethoxysilane,cyclohexyl2,5-dimethylcyclopentyldiethoxysilane, cyclohexyl-2,5-dimethylcyclopentyldipropoxysilane, 3-methylcyclohexyl-2,5-dimethylcyclopentyldimethoxysilane, 3-methylcyclohexyl-2,5-dimethylcyclopentyldiethoxysilane, 3-methylcyclohexyl-2,5-dimethylcyclopentyldipropoxysilane, 4-methylcyclohexyl-2,5-dimethylcyclopentyldimethoxysilane, 4-methylcyclohexyl-2,5-dimethylcyclopentyldiethoxysilane, 4-methylcyclohexyl-2,5-dimethylcyclopentyldipropoxysilane, 3,5-dimethylcyclohexyl-2,5-dimethylcyclopentyldimethoxysilane, 3,5-dimethylcyclohexyl-2,5-dimethylcyclopentyldiethoxysilane,3,5-dimethylcyclohexyl-2,5-dimethylcyclopentyldipropoxysilane, 3,3-dimethylcyclohexyl-2,5-dimethylcyclopentyldimethoxysilane, 4,4-dimethylcyclohexyl-2,5-dimethylcyclopentyldimethoxysilane, cyclohexyl-2,2-dimethylcyclopentyldimethoxysilane, cyclohexyl-2,2-dimethylcyclopentyldiethoxysilane, cyclohexyl-2,2-dimethylcyclopentyldipropoxysilane, 3-methylcyclohexyl-2,2-dimethylcyclopentyldimethoxysilane, 3-methylcyclohexyl-2,2-dimethylcyclopentyldiethoxysilane, 3-methylcyclohexyl-2,2-dimethylcyclopentyldipropoxysilane, 4-methylcyclohexyl-2,2-dimethylcyclopentyldimethoxysilane, 4-methylcyclohexyl-2,2-dimethylcyclopentyldiethoxysilane, 4-methylcyclohexyl-2,2-dimethylcyclopentyldipropoxysilane, 3,5-dimethylcyclohexyl-2,2-dimethylcyclopentyldimethoxysilane, 3,5-dimethylcyclohexyl-2,2-dimethylcyclopentyldiethoxysilane, 3,5-dimethylcyclohexyl-2,2-dimethylcyclopentyldipropoxysilane, 3,3-dimethylcyclohexyl-2,2-dimethylcyclopentyldimethoxysilane, 4,4-dimethylcyclohexyl-2,2-dimethylcyclopentyldimethoxysilane, cyclohexyl-3,3-dimethylcyclopentyldimethoxysilane, cyclohexyl-3,3-dimethylcyclopentyldiethoxysilane, cyclohexyl-3,3-dimethylcyclopentyldipropoxysilane, 3-methylcyclohexyl-3,3-dimethylcyclopentyldimethoxysilane, 3-methylcyclohexyl-3,3-dimethylcyclopentyldiethoxysilane, 3-methylcyclohexyl3,3-dimethylcyclopentyldipropoxysilane, 4-methylcyclohexyl-3,3-dimethylcyclopentyldimethoxysilane, 4-methylcyclohexyl-3,3-dimethylcyclopentyldiethoxysilane, 4-methylcyclohexyl-3,3-dimethylcyclopentyldipropoxysilane, 3,5-dimethylcyclohexyl-3,3-dimethylcyclopentyldimethoxysilane, 3,5-dimethylcyclohexyl-3,3-dimethylcyclopentyldiethoxysilane, 3,5-dimethylcyclohexyl-3,3-dimethylcyclopentyldipropoxysilane, 3,3-dimethylcyclohexyl-3,3-dimethylcyclopentyldimethoxysilane, 4,4-dimethylcyclohexyl-3,3-dimethylcyclopentyldimethoxysilane, 3-chlorocyclohexylcyclopentyldimethoxysilane, 4-chlorocyclohexylcyclopentyldimethoxysilane, 3,5-dichlorocyclohexylcyclopentyldimethoxysilane, cyclohexyl-2-chlorocyclopentyldimethoxysilane, cyclohexyl-3-cyclopentyldimethoxysilane, cyclohexyl-2,3-dichlorocyclopentyldimethoxysilane, cyclohexyl-2,5-dichlorocyclopentyldimethoxysilane, 3-chlorocyclohexyl-2-chlorocyclopentyldimethoxysilane,4-chlorocyclohexyl-3-chlorocyclopentyldimethoxysilane, and 3,5-dichlorocyclohexyl-2,3-dichlorocyclopentyldimethoxysilane.

Preferred of these asymmetric organosilicon compounds are cyclohexylcyclopentyldimethoxysilane, cyclohexylcyclopentyldiethoxysilane, 3-methylcyclohexylcyclopentyldimethoxysilane, 4-methylcyclohexylcyclopentyldimethoxysilane, and 3,5-dimethylcyclohexylcyclopentyldimethoxysilane. These organosilicon compounds may be used either individually or in combination of two or more thereof.

The organosilicon compound of the present invention is useful as an (internal and/or external) electron donor for various olefin polymerization catalysts. Namely, the organosilicon compound can be used as an electron donor in the homo- or copolymerization of ethylene, propylene, 1-butene, 1-pentene, 4-methyl-1-pentene, vinylcyclohexane. In particular, the organosilicon compound is suitable for use as an electron donor of a catalyst for the homopolymerization of ethylene or propylene or the copolymerization of ethylene and propylene, and the optimal use thereof is as an electron donor of a catalyst for the homopolymerization of propylene or the copolymerization of propylene and ethylene.

The cyclohexylcyclopentyldialkoxysilane of the present invention can be prepared by various methods. In one of the simplest methods, the organosilicon compound is obtained by the reaction of a monocycloalkyltrialkoxysilane (i.e., monocyclohexyl- or monocyclopentyl-trialkoxysilane) with a cycloalkyl Grignard reagent (i.e., a Grignard reagent having a cyclopentyl or cyclohexyl group, respectively).

For example, cyclopentyl chloride (commercial product) is first reacted with magnesium in the presence of a solvent, e.g., an ether such as tetrahydrofuran, diethyl ether, or di-n-butyl ether, to yield a cyclopentyl Grignard reagent (cyclopentylmagnesium chloride). This reaction may be carried out at a temperature of from room temperature to 60°C. The cyclopentyl Grignard reagent is then reacted with cyclohexyltrimethoxysilane to obtain cyclohexylcyclopentyldimethoxysilane; this reaction may be conducted in the presence of an ether such as tetrahydrofuran, diethyl ether, or di-n-butyl ether as in the above-described first reaction, or in the presence of an aliphatic hydrocarbon solvent such as hexane or heptane or an aromatic hydrocarbon solvent such as toluene, benzene, or xylene. This reaction may be carried out at a temperature of from 50°C to 200°C, preferably at a temperature of from 100°C to 200°C or at a temperature of from 100°C to 200°C under boiling or refluxing of the solvent.

Although the monocycloalkyltrialkoxysilane, e.g., cyclohexyltrimethoxysilane employed above, for use in the above reaction may be a commercial product, it may be prepared by various known methods. In one method, the desired compound is prepared by reacting cyclohexyltrichlorosilane with methanol to alkoxylate the silane compound with the evolution of hydrogen chloride. Although the cyclohexyltrichlorosilane for use in this reaction may be a commercial product, it may be easily prepared by the hydrosilylation reaction of cyclohexene with trichlorosilane ($HSiCl_3$). Another method for preparing cyclohexyltrimethoxysilane comprises hydrogenating a commercial product of phenyltrimethoxysilane in the presence of a catalyst, e.g.. a Raney nickel catalyst.

The cyclohexylcyclopentyldimethoxysilane thus produced can be identified by nuclear magnetic resonance spectroscopy ($^1H$-NMR, $^{13}C$-NMR), infrared absorption spectrometry (IR), mass spectrometry (MS), etc. $^{13}C$-NMR spectrometry (in $CDCl_3$) gives a spectrum which has a signal at $\delta = 50.7$ attributable to the carbon atoms of the methoxy groups, signals at $\delta = 24.5$, 26.8, 26.9, and 27.8 attributable to the cyclohexyl group, and signals at $\delta = 22.8$, 26.7, and 27.4 attributable to the cyclopentyl group. IR spectrometry gives a spectrum having a peak at around 1,100 $cm^{-1}$ attributable to the Si-O-C bonds.

The organosilicon compound of the present invention, i.e., a cyclohexylcyclopentyldialkoxysilane, when used as an electron donor serving as one component of a Ziegler-Natta catalyst for olefin polymerization, makes it possible to obtain a polyolefin having a broad molecular weight distribution and high crystallinity while retaining high performances with respect to catalytic activity and the yield of highly stereoregular polymer which performances are not lower than those conventionally known as high-performance catalysts.

Solid catalyst component (A), which constitutes the catalyst for the polymerization of olefins according to the present invention, is prepared by contacting a magnesium compound, a titanium halide compound, and an electron donor compound and contains magnesium, titanium, an internal electron donor compound and a halogen as essential components.

The magnesium compound which can be used for preparing solid catalyst component (A) includes a magnesium dihalide, a dialkylmagnesium, an alkylmagnesium halide, a dialkoxymagnesium, an alkoxymagnesium halide, a diaryloxymagnesium, and an aryloxymagnesium halide. The alkyl or alkoxy moiety of the above-described magnesium compounds generally has from 1 to 6 carbon atoms and preferably from 1 to 4 carbon atoms.

Specific examples of the magnesium halide are magnesium dichloride, magnesium dibromide, magnesium diiodide, and magnesium difluoride.

Specific examples of the dialkylmagnesium are dimethylmagnesium, diethylmagnesium, ethylmethylmagnesium, dipropylmagnesium, methylpropylmagnesium, ethylpropylmagnesium, dibutylmagnesium, butylmethylmagnesium, and butylethylmagnesium. These dialkylmagnesiums may be obtained by reacting metallic magnesium with a halogenated hydrocarbon or an alcohol.

Specific examples of the alkylmagnesium halide include ethylmagnesium chloride, propylmagnesium chloride, and butylmagnesium chloride. These alkylmagnesium halides may be obtained by reacting metallic magnesium with a halogenated hydrocarbon or an alcohol.

Specific examples of the dialkoxymagnesium and the diaryloxymagnesium include dimethoxymagnesium, diethoxymagnesium, dipropoxymagnesium, dibutoxymagnesium, diphenoxymagnesium, ethoxymethoxymagnesium, ethoxypropoxymagnesium, and butoxyethoxymagnesium.

Specific examples of the alkoxymagnesium halide are methoxymagnesium chloride, ethoxymagnesium chloride, propoxymagnesium chloride, and butoxymagnesium chloride.

Preferred of these magnesium compounds are dialkoxymagnesiums, with diethoxymagnesium and dipropoxymagnesium being especially preferred. The magnesium compounds may be used either individually or in combination of two or more thereof.

The dialkoxymagnesium, which can be used preferably, is at least one dialkoxymagnesium species having from 1 to 3 carbon atoms in the alkoxy moiety thereof and has a granular or powdered form, the particles of which may

have an irregular shape or a spherical shape. In using spherical particles of diethoxymagnesium, for example, the resulting powdered polymer will have a more satisfactory particle shape and a narrower particle size distribution. As a result, the polymer powder as produced has improved handling properties, and troubles attributed to fine particles, such as obstruction, would be eliminated.

The spherical diethoxymagnesium particles as above referred to do not necessarily need to be true spheres, and ellipsoidal or potato-like particles may also be used. The terminology "spherical" as used herein may be quantified as a longer axis diameter ($\ell$) to shorter axis diameter (w) ratio ($\ell$/w) of not more than 3, preferably from 1 to 2, and still preferably from 1 to 1.5.

The dialkoxymagnesium to be used has an average particle size of from 1 to 200 μm, preferably from 5 to 150 μm.

In the case of spherical diethoxymagnesium, it has an average particle size of from 1 to 100 μm, preferably from 5 to 50 μm, more preferably from 10 to 40 μm. It is preferable to use particles having a sharp size distribution with a small proportion of fine or coarse particles. More specifically, particles containing not more than 20%, preferably not more than 10%, of fine particles of 5 μm or smaller and not more than 10%, preferably not more than 5%, of coarse particles of 100 μm or greater. Such a particle size distribution corresponds to ln ($D_{90}/D_{10}$) of not more than 3, preferably not more than 2, wherein $D_{90}$ and $D_{10}$ represent a cumulative 90% diameter and a cumulative 10% diameter, respectively, of a cumulative particle size distribution depicted from the small diameter side.

The above-mentioned dialkoxymagnesium does not always need to be present as a starting material in the preparation of solid catalyst component (A). For example, it may be prepared in situ from metallic magnesium and an alcohol in the presence of a catalyst, e.g., iodine at the time of preparing solid catalyst component (A).

The titanium halide compound which can be used for preparing solid catalyst component (A) is at least one of a titanium halide and an alkoxytitanium halide represented by formula: $Ti(OR^3)_nX^1_{4-n}$, wherein $R^3$ represents an alkyl group having from 1 to 4 carbon atoms; $X^1$ represents a chlorine atom, a bromine atom or an iodine atom; and n represents 0 or an integer of 1, 2 or 3.

Specific examples of the titanium halide include titanium tetrahalides, such as $TiC\ell_4$, $TiBr_4$, and $TiI_4$. Specific examples of the alkoxytitanium halide are $Ti(OCH_3)C\ell_3$, $Ti(OC_2H_5)C\ell_3$, $Ti(OC_3H_7)C\ell_3$, $Ti(On\text{-}C_4H_9)C\ell_3$, $Ti(OCH_3)_2C\ell_2$, $Ti(OC_2H_5)_2C\ell_2$, $Ti(OC_3H_7)_2C\ell_2$, $Ti(On\text{-}C_4H_9)_2C\ell_2$, $Ti(OCH_3)_3C\ell$, $Ti(OC_2H_5)_3C\ell$, $Ti(OC_3H_7)_3C\ell$, and $Ti(On\text{-}C_4H_9)_3C\ell$. Preferred of these titanium halide compounds are titanium tetrahalides, with $TiC\ell_4$ being particularly preferred. These titanium halide compounds may be used either individually or in combination of two or more thereof.

The internal electron donor compound which can be used for preparing solid catalyst component (A) is an organic compound containing oxygen or nitrogen. Such a compound include alcohols, phenols, ethers, esters, ketones, acid halides, aldehydes, amines, amides, nitriles, isocyanates, and organosilicon compounds containing an Si-O-C bond.

Specific examples of the internal electron donor compound include alcohols, such as methanol, ethanol, propanol, butanol, pentanol, hexanol, octanol, 2-ethylhexyl alcohol, and dodecanol; phenols, such as phenol and cresol; ethers, such as dimethyl ether, diethyl ether, dipropyl ether, dibutyl ether, diamyl ether, and diphenyl ether; monocarboxylic acid esters, such as methyl formate, ethyl acetate, vinyl acetate, propyl acetate, octyl acetate, cyclohexyl acetate, ethyl propionate, ethyl butyrate, methyl benzoate, ethyl benzoate, propyl benzoate, butyl benzoate, octyl benzoate, cyclohexyl benzoate, phenyl benzoate, methyl p-toluylate, ethyl p-toluylate, methyl anisate, and ethyl anisate; dicarboxylic acid esters, such as diethyl maleate, dibutyl maleate, dimethyl adipate, diethyl adipate, dipropyl adipate, dibutyl adipate, dimethyl adipate, diisodecyl adipate, dioctyl adipate, dimethyl phthalate, diethyl phthalate, dipropyl phthalate, dibutyl phthalate, dipentyl phthalate, dihexyl phthalate, diheptyl phthalate, dioctyl phthalate, dinonyl phthalate, and didecyl phthalate; ketones, such as acetone, methyl ethyl ketone, methyl butyl ketone, acetophenone, and benzophenone; acid halides, such as phthalic acid dichloride and terephthalic acid dichloride; aldehydes, such as acetaldehyde, propionaldehyde, octylaldehyde, and benzaldehyde; amines, such as methylamine, ethylamine, tributylamine, piperidine, aniline, and pyridine; amides, such as acetamide, and acrylamide; nitriles, such as acetonitrile, benzonitrile, and tolunitrile; and isocyanates, such as phenyl isocyanate, and n-butyl isocyanate.

Specific examples of the organosilicon compound containing an Si-O-C bond are trimethylmethoxysilane, trimethylethoxysilane, tri-n-propylmethoxysilane, tri-n-propylethoxysilane, tri-n-butylmethoxysilane, tri-isobutylmethoxysilane, tri-t-butylmethoxysilane, tri-n-butylethoxysilane, tricyclohexylmethoxysilane, tricyclohexylethoxysilane, dimethyldimethoxysilane, dimethyldiethoxysilane, di-n-propyldimethoxysilane, diisopropyldimethoxysilane, di-n-propyldiethoxysilane, diisopropyldiethoxysilane, di-n-butyldimethoxysilane, diisobutyldimethoxysilane, di-t-butyldimethoxysilane, di-n-butyldiethoxysilane, n-butylmethyldimethoxysilane, bis(2-ethylhexyl)dimethoxysilane, bis(2-ethylhexyl)diethoxysilane, dicyclohexyldimethoxysilane, dicyclohexyldiethoxysilane, dicyclopentyldimethoxysilane, dicyclopentyldiethoxysilane, cyclohexylmethyldimethoxysilane, cyclohexylmethyldiethoxysilane, cyclohexylethyldimethoxysilane, cyclohexylisopropyldimethoxysilane, cyclohexylethyldiethoxysilane, cyclopentylmethyldimethoxysilane, cyclopentylethyldiethoxysilane, cyclopentylisopropyldimethoxysilane,cyclohexyl(n-pentyl)dimethoxysilane, cyclopentylisobutyldimethoxysilane, diphenyldimethoxysilane, diphenyldiethoxysilane, phenylmethyldimethoxysilane, phenylmethyldiethoxysilane, phenylethyldimethoxysilane, phenylethyldiethoxysilane, cyclohexyldimethylmethoxysilane, cyclohexyldimethylethoxysilane, cyclohexyldiethylmethoxysilane, cyclohexyldiethylethoxysilane, 2-ethylhexyltrimethoxysilane, 2-ethylhexyltriethoxysilane,cyclohexyl(n-pentyl)diethoxysilane, cyclopentylmethyldimethoxysilane, cyclopentylethyldimethoxysilane, cyclopentylmethyldiethoxysilane, cyclohexyl(n-propyl)dimethoxysilane, cyclohexyl(n-butyl)dimethoxysilane, cyclohexyl(n-propyl)diethoxysilane, cyclohexyl(n-butyl)diethoxysilane, methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, n-butyltrimethoxysilane, isobutyltrimethoxysilane, t-butyltrimethoxysilane, n-butyltriethoxysilane, cyclohexyltrimethoxysilane, cyclohexyltriethoxysilane, cyclopentyltrimethoxysilane, cyclopentyltriethoxysilane, vinyltrimethoxysilane, vinyltriethoxysilane, 2-ethylhexyltrimethoxysilane, 2-ethylhexyltriethoxysilane, phenyltrimethoxysilane, and phenyltriethoxysilane.

Among these internal electron donor compounds preferred are esters, with phthalic diesters being more preferred. The ester moiety in the phthalic diesters is preferably a straight chain or branched chain alkyl group having from 1 to 12 carbon atoms and preferably from 2 to 10 carbon atoms. Specific examples of suitable phthalic diesters are dimethyl phthalate, diethyl phthalate, di-n-propyl phthalate, diisopropyl phthalate, di-n-butyl phthalate, diisobutyl phthalate, ethylmethyl phthalate, methylisopropyl phthalate, ethyln-propyl phthalate, ethyl-n-butyl phthalate, di-n-pentyl phthalate, diisopentyl phthalate, dihexyl phthalate, di-n-heptyl phthalate, di-n-octyl phthalate, bis(2-methylhexyl)phthalate, bis(2-ethylhexyl) phthalate, di-n-nonyl phthalate, diisodecyl phthalate, bis(2,2-dimethylheptyl) phthalate, n-butylisohexyl phthalate, n-butylisooctyl phthalate, n-pentylhexyl phthalate, n-pentylisohexyl phthalate, isopentylheptyl phthalate, n-pentylisooctyl phthalate, n-pentylisononyl phthalate, isopentyl-n-decyl phthalate, n-pentylundecyl phthalate, isopentylisohexyl phthalate, n-hexylisooctyl phthalate, n-hexylisononyl phthalate, n-hexyl-n-decyl phthalate, n-heptylisooctyl phthalate, n-heptylisononyl phthalate, n-heptylneodecyl phthalate, and isooctylisononyl phthalate. These phthalic acid esters may be used either individually or in combination of two or more thereof.

Solid catalyst component (A) can be prepared by contacting the above-mentioned magnesium compound, titanium halide compound and electron donor compound in a manner appropriately selected from conventional means. Known methods for preparing a solid catalyst component are disclosed, e.g., in JP-A-63-308004, JP-A-63-314211, JP-A-64-6006, JP-A-64-14210, JP-A-64-43506, JP-A-63-3010, and JP-A-62-158704.

Typical methods for preparing solid catalyst component (A) are described below.

(1) Magnesium chloride is dissolved in a tetraalkoxytitanium, and the solution is brought into contact with polysiloxane to obtain a solid component. The solid component is reacted with silicon tetrachloride, contacted with phthalic acid chloride, and reacted with titanium tetrachloride to prepare solid catalyst component (A). The resulting solid catalyst component may be preliminarily treated with an organoaluminum compound, an organosilicon compound, and an olefin.

(2) Anhydrous magnesium chloride and 2-ethylhexyl alcohol are reacted to form a uniform solution, which is brought into contact with phthalic anhydride. The resulting solution is then brought into contact with titanium tetrachloride and diester of phthalic acid to obtain a solid component, which is further reacted with titanium tetrachloride to prepare solid catalyst component (A).

(3) Metallic magnesium, butyl chloride, and butyl ether are reacted to synthesize an organomagnesium compound. The organomagnesium compound is brought into contact with tetrabutoxytitanium and tetraethoxysilane to obtain a solid product, which is then brought into contact with a diester of phthalic acid, dibutyl ether, and titanium tetrachloride to prepare solid catalyst component (A). The resulting solid catalyst component may be preliminarily treated with an organoaluminum compound, an organosilicon compound, and an olefin.

(4) An organomagnesium compound, e.g., dibutylmagnesium, and an organoaluminum compound are brought into contact with an alcohol, e.g., butanol or 2-ethylhexyl alcohol, in the presence of a hydrocarbon solvent to form a uniform solution. The resulting solution is brought into contact with a silicon compound, e.g., $SiC\ell_4$, $HSiC\ell_3$ or polysiloxane, to obtain a solid component. The solid component is brought into contact with titanium tetrachloride and a diester of phthalic acid in the presence of an aromatic-hydrocarbon solvent, and the reaction mixture is further brought into contact with titanium tetrachloride to obtain solid catalyst component (A).

(5) Magnesium chloride, a tetraalkoxytitanium, and an aliphatic alcohol are brought into contact in the presence of an aliphatic hydrocarbon to form a uniform solution. Titanium tetrachloride is added to the solution, and the mixture is heated to precipitate a solid component. The solid component is contacted with a diester of phthalic acid and further reacted with titanium tetrachloride to prepare solid catalyst component (A).

(6) Metallic magnesium powder, an alkyl monohalide, and iodine are contacted. The resulting reaction product, a tetraalkoxytitanium, an acid halide, and an aliphatic alcohol are contacted in the presence of an aliphatic hydrocarbon to form a uniform solution. Titanium tetrachloride is added to the solution, and the mixture is heated to precipitate a solid component. The solid component is brought into contact with a diester of phthalic acid and further reacted with titanium tetrachloride to prepare solid catalyst component (A).

(7) Diethoxymagnesium is suspended in an alkylbenzene or a halogenated hydrocarbon solvent, and the resulting

suspension is brought into contact with titanium tetrachloride. The mixture is heated and then contacted with a diester of phthalic acid to obtain a solid component. The solid component is washed with an alkylbenzene and again contacted with titanium tetrachloride in the presence of the alkylbenzene to prepare solid catalyst component (A). The resulting solid catalyst component may be subjected to a heat treatment in the presence or absence of a hydrocarbon solvent.

(8) Diethoxymagnesium is suspended in an alkylbenzene, and the resulting suspension is brought into contact with titanium tetrachloride and phthalic acid chloride to obtain a solid component. The solid component is washed with an alkylbenzene and again contacted with titanium tetrachloride in the presence of the alkylbenzene to prepare solid catalyst component (A). The resulting solid catalyst component may further be contacted with titanium tetrachloride twice or more times.

(9) Diethoxymagnesium, calcium chloride, and a silicon compound represented by $Si(OR^4)_4$ (wherein $R^4$ is an alkyl group or an aryl group) are co-ground, and the resulting grinds are suspended in an aromatic hydrocarbon. The suspension is brought into contact with titanium tetrachloride and an diester of aromatic dicarboxylic acid, and the product is further contacted with titanium tetrachloride to prepare solid catalyst component (A).

(10) Diethoxymagnesium and a diester of phthalic acid are suspended in an alkylbenzene, and the suspension is added to titanium tetrachloride to obtain a solid component. The solid component is washed with an alkylbenzene, and further contacted with titanium tetrachloride in the presence of the alkylbenzene to prepare solid catalyst component (A).

(11) A calcium halide and aliphatic magnesium, e.g., magnesium stearate, are contact reacted with titanium tetrachloride and an aromatic dicarboxylic acid diester, and the reaction product is further brought into contact with titanium tetrachloride to prepare solid catalyst component (A).

(12) Diethoxymagnesium is suspended in an alkylbenzene or a halogenated hydrocarbon solvent, and the resulting suspension is brought into contact with titanium tetrachloride, and the mixture is heated and contacted with a diester of phthalic acid to react. The resulting solid component is washed with an alkylbenzene and further contacted with titanium tetrachloride in the presence of the alkylbenzene to prepare solid catalyst component (A). At any stage of the above preparation procedure, the system may be brought into contact with aluminum chloride.

(13) Diethoxymagnesium is suspended in an alkylbenzene or a halogenated hydrocarbon solvent, and the resulting suspension is brought into contact with titanium tetrachloride, and the mixture is heated and contacted with two or more diesters of phthalic acid different in the carbon atom number of the alkyl moiety to obtain a solid component. The resulting solid component is washed with an alkylbenzene and further contacted with titanium tetrachloride in the presence of the alkylbenzene to prepare solid catalyst component (A). In the above preparation, when the solid component is brought into contact with titanium tetrachloride, it may again contacted with two or more diesters of phthalic acid different in the carbon atom number of the alkyl moiety. Further, the diesters of phthalic acid may be used in combination with the above-enumerated electron donor compound other than diesters of phthalic acid.

(14) Diethoxymagnesium, titanium tetrachloride, and a diester of phthalic acid are brought into contact in the presence of chlorobenzene, and the reaction product is then contacted with titanium tetrachloride and phthalic acid dichloride. The product is further contact reacted with titanium tetrachloride to prepare solid catalyst component (A). The thus prepared solid catalyst component may further be contacted with titanium tetrachloride. Further, at any stage of the above preparation procedure, a silicon compound may be contacted with the preparation system.

(15) Diethoxymagresium, 2-ethylhexyl alcohol, and carbon dioxide are brought into contact in the presence of toluene to form a uniform solution. The solution is contacted with titanium tetrachloride and a diester of phthalic acid to obtain a solid component. The solid component is dissolved in tetrahydrofuran, and the solid component is made to precipitate. The resulting solid component is contact reacted with titanium tetrachloride to prepare solid catalyst component. If desired, the contact with titanium tetrachloride may be conducted repeatedly. At any stage of the above preparation procedure, a silicon compound, e.g.. tetrabutoxysilane, may be contacted with the preparation system.

The amounts of the magnesium compound, titanium halide compound and electron donor compound to be used for the preparation of solid catalyst component (A) vary depending on the method of preparation and cannot be generally specified. For example, the titanium halide compound is used in an amount of from 0.5 to 100 mol, preferably from 1 to 10 mol, and the electron donor compound from 0.01 to 3 mol, preferably from 0.02 to 1 mol, each per mole of the magnesium compound. The titanium content in solid catalyst component (A) is not particularly limited and it is generally from 0.5 to 10 % by weight, preferably from 1 to 5 % by weight, based on the weight of solid catalyst component (A).

Organoaluminum compound (B) which can be used in the present invention includes compounds represented by $R^5{}_yAlY_{3-y}$, wherein $R^5$ represents a straight chain or branched chain alkyl group, preferably having from up to 15 carbon atoms, more preferably up to 5 carbon atoms; Y represents a hydrogen atom, a halogen atom, or an alkoxyl group preferably having up to 4 carbon atoms; and y represents a real number of 1 to 3.

Specific examples of organoaluminum compound (B) include trialkylaluminiums such as triethylaluminium and triisobutylaluminium; dialkylaluminium halides such as diethylaluminium bromide, diethylaluminium chloride and dibutylaluminium chloride; alkylaluminium sesquihalides such as ethylaluminium sesquichloride and butylaluminium sesquichloride; alkylaluminium alkoxides such as diethylaluminium ethoxide and dibutylaluminium butoxide; alkylaluminium hydrides such as diethylaluminium hydride, dibutylaluminium hydride and ethylaluminium hydride; and a mixture thereof. Of these, triethylaluminium and triisobutylaluminium are preferred.

In the present invention, an olefin is homo- or copolymerized in the presence of a catalyst comprising solid catalyst component (A), organoaluminum compound (B), and organosilicon compound (C). The ratio of components (A), (B), and (C) to be used is not particularly limited as long as the effects of the present invention are not impaired. Usually, organoaluminum compound (B) is used in an amount of from 1 to 500 mol and preferably from 5 to 400 mol per mol of the titanium atom in solid catalyst component (A), and organosilicon compound (C) is used in an amount of from 0.0020 to 2 mol, preferably from 0.0020 to 0.5 mol, and more preferably from 0.0025 to 0.5 mol per mol of organobalunium compound (B).

The catalyst of the present invention can be prepared by bringing the above-described components (A), (B) and (C) into contact. There is no particular limitation on the order in contact of the components (A), (B) and (C). In general, the component (B) is brought into contact with the component (C) and subsequently with the component (A), or the component (B) is brought into contact with the component (A) and subsequently with the component (C).

Recommended combinations of the components (A), (B), and (C) are tabulated in Table 1 below.

TABLE 1

| Solid Catalyst Component (A) (Process of Preparation) | Organoaluminum Compound (B) | Organosilicon Compound (C) |
|---|---|---|
| process (7) | triethylaluminum | cyclohexylcyclopentyldimethoxysilane |
| process (7) | triethylaluminum | 3-methylcyclohexylcyclopentyldimethoxysilane |
| process (8) | triethylaluminum | cyclohexylcyclopentyldimethoxysilane |
| process (10) | triethylaluminum | cyclohexylcyclopentyldimethoxysilane |
| process (10) | triethylaluminum | 4-methylcyclohexylcyclopentyldimethoxysilane |
| process (12) | triethylaluminum | cyclohexylcyclopentyldimethoxysilane |
| process (12) | triethylaluminum | 3-methylcyclohexylcyclopentyldimethoxysilane |
| process (13) | triethylaluminum | cyclohexylcyclopentyldimethoxysilane |
| Process (13) | triethylaluminum | 3,5-dimethylcyclohexylcyclopentyldimethoxysilane |

Polymerization reaction according to the present invention may be carried out in the presence or absence of an organic solvent. The olefin monomer to be polymerized may be used in either a gaseous state or a liquid state. The polymerization is conducted at a temperature of not higher than 200°C, preferably not higher than 100°C, under a pressure of not higher than 10 MPa, preferably not higher than 5 MPa. The reaction may be effected either in a continuous system or in a batch system and through one step or two or more steps.

The olefins to be homo- or copolymerized according to the present invention are not particularly limited and generally have 2 to 20 carbon atoms, such as ethylene, propylene, 1-butene, 1-pentene, 4-methyl-1-pentene, and vinylcyclohexane. These olefins may be used either individually or in combination of two or more thereof. The effects of the present invention in assuring high stereoregularity, broad molecular weight distribution, and high yield are particularly pronounced in homopolymerization of propylene or copolymerization of propylene and ethylene.

For ensuring the improvements in catalytic activity and stereoregularity and particle properties of the polymer produced, it is preferable to conduct pre-polymerization prior to substantial polymerization. Monomers to be pre-polymerized include not only ethylene and propylene but other monomers, such as styrene and vinylcyclohexane.

The catalyst of the present invention is used in an amount of about 0.005 to 0.5 mmol, preferably about 0.01 to 0.5 mmol, calculated as titanium atom in solid catalyst component (A) per liter of the polymerization zone.

According to the process of the present invention, the olefin polymers obtained have a broader molecular weight distribution than those obtained by conventional processes, by at least 1 higher as expressed in terms of the ratio of weight average molecular weight to number average molecular weight (Mw/Mn) of the blefin polymers, and the yield of stereoregular polymers is extremely high. That is, the process has been confirmed to provide polyolefins having not only broad molecular weight distribution (for example. 6 or higher in terms of the Mw/Mn) but high stereoregularity in extremely high yield.

The present invention will now be illustrated in greater detail with reference to Examples in view of Comparative Examples, but it should be understood that the present invention is not construed as being limited to these Examples. All the percents are by weight unless otherwise indicated.

EXAMPLE 1

Into a 2-liter four-necked flask equipped with a stirrer, thermometer, Dimroth condenser, and dropping funnel was introduced 18.5 g (0.76 mol) of magnesium shavings. The magnesium was dried in an argon stream, and 20 ml of di-n-butyl ether was then added thereto. The contents were cooled to room temperature, and a small amount of 1,2-dibromoethane was added thereto to activate the magnesium. A solution prepared by dissolving 79.6 g (0.76 mol) of cyclopentyl chloride in 600 ml of di-n-butyl ether was then added dropwise over a period of 3.5 hours, during which the temperature of the system spontaneously increased to 50°C. Subsequently, 143.0 g (0.70 mol) of cyclohexyltrimethoxysilane was added thereto at room temperature, and the reaction was then conducted for 1 hour under reflux.

After completion of the reaction, the reaction mixture was cooled to room temperature, and 372 g (0.38 mol) of a 10% aqueous sulfuric acid solution was added thereto dropwise at a temperature of 40°C or lower. The organic layer was washed with 300 ml of a 1% aqueous sodium hydrogen carbonate solution and then dried over anhydrous magnesium sulfate. After the drying agent was filtered off, vacuum distillation was performed to obtain 143.6 g of a fraction having a boiling point of 78°C at 0.2 Torr. The yield was 84.6%. This reaction product was ascertained to be cyclohexylcyclopentyldimethoxysilane by MS, two-dimensional analysis with $^1$H-NMR/$^{13}$C-NMR, and IR. The results of MS, $^1$H-NMR/$^{13}$C-NMR (COSY spectrum), and IR are shown in Figs. 1, 2, and 3, respectively.

The analyses by MS, $^1$H-NMR/$^{13}$C-NMR, and IR were carried out under the following conditions.

| | |
|---|---|
| MS: | apparatus ... Finigan Mat (GC-MS). |
| $^1$H-NMR/$^{13}$C-NMR: | apparatus ... JEOL GSX270,<br>solvent ... $CDCl_3$. |
| IR: | apparatus ... Perkin Elmer 1600 Series (FT-IR),<br>KBr sand method. |

EXAMPLE 2

Preparation of Solid Catalyst Component:

Into a 200-ml round-bottom flask the inside atmosphere of which had been sufficiently replaced with nitrogen gas and which was equipped with a stirrer were introduced 10 g of diethoxymagnesium and 80 ml of toluene. The contents were stirred to obtain a suspension. To this suspension was added 20 ml of titanium tetrachloride. The mixture was heated and, at the time when the temperature thereof had reached 62°C, 1.0 ml of diethyl phthalate was added. This mixture was then heated and, at the time when the temperature thereof had reached 110°C, 3.5 ml of dioctyl phthalate was added. The resulting mixture was heated to 112°C and stirred at this temperature for 1.5 hours to allow a reaction to proceed. After completion of the reaction, the reaction product was washed twice with 100 ml of toluene heated at 90°C. To the washed reaction product were added 20 ml of titanium tetrachloride and 80 ml of toluene. This mixture was heated to 100°C and stirred for 2 hours to allow a reaction to proceed. After completion of the reaction, the reaction product was washed 10 times with 100 ml of n-heptane warmed at 40°C to obtain a solid catalyst component. The titanium content of this solid catalyst component was measured and found to be 2.46% by weight.

Formation of Polymerization Catalyst and Polymerization of Olefin:

Into a 2.0-liter autoclave the inside atmosphere of which had been sufficiently replaced with nitrogen gas and which was equipped with a stirrer were introduced 1.32 mmol of triethylaluminum, 0.13 mmol of cyclohexylcyclopentyldimethoxysilane, and 0.0066 mmol of the solid catalyst component in terms of the amount of titanium atoms. Thus, a polymerization catalyst was formed. Thereafter, 1.8 liters of hydrogen gas and 1.4 liters of liquefied propylene were introduced into the autoclave to conduct polymerization at 70°C for 30 minutes. The weight (a) of the polymer thus obtained was 349.1 g. When this polymer was extracted with boiled n-heptane for 6 hours, the n-heptane-insoluble amount (b) was 343.2 g. The catalytic activity was 23,900 g per g of the solid catalyst component used. The yield of the wholly crystalline polymer was 98.3%. The polymer yielded had an MI of 3.6 g/10-min, a molecular weight distribution of 7.1, and a melting point of 164.0°C.

The catalytic activity per unit weight of the solid catalyst component used was calculated using the following equation.

$$\text{Catalytic Activity} = \frac{\text{(a) (g)}}{\text{Solid Catalyst Component (g)}}$$

The yield of wholly crystalline polymer was calculated using the following equation.

$$\text{Yield of Wholly Crystalline Polymer} = \frac{(b)}{(a)} \times 100\ (\%)$$

The molecular weight distribution was determined using the following equation.

$$\text{Molecular Weight Distribution} = \frac{\text{Weight-average Molecular Weight } (M_w)}{\text{Number-average Molecular Weight } (M_n)}$$

As described above, the organosilicon compound of the present invention, when used as an electron donor serving as one component of an olefin polymerization catalyst, gives a polyolefin having a broad molecular weight distribution and high crystallinity, while retaining high performances with respect to catalytic activity and the yield of highly stereoregular polymer which performances are equal to or higher than those of conventionally known high-performance catalysts.

EXAMPLE 3

Preparation of Solid Catalyst Component:

In a 200 mℓ-volume round flask equipped with a stirrer having been thoroughly purged with nitrogen gas were charged 10 g of diethoxymagnesium and 80 mℓ of toluene to prepare a suspension. To the suspension was added 20 mℓ of titanium tetrachloride, the mixture was heated to 80°C, at which 2.7 mℓ of di-n-butyl phthalate was added. The mixture was further heated up to 110°C, at which the mixture was allowed to react for 2 hours with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 100°C, at which it was allowed to react for 2 hours while stirring. After completion of the reaction, the reaction mixture was washed with ten 100 mℓ portions of n-heptane at 40°C to obtain a solid catalyst component. The solid content of the solid catalyst component, separated by solid-liquid separation, was found to have a titanium content of 2.91%.

Preparation of Catalyst System and Polymerization:

In the same manner as in Example 2, a catalyst system was prepared using the above-prepared solid catalyst component and propylene was polymerized in the presence of the catalyst system. The properties of the resulting polymer are shown in Table 2 below.

EXAMPLE 4

Preparation of Solid Catalyst Component:

In a 200 mℓ-volume round flask equipped with a stirrer having been thoroughly purged with nitrogen gas were charged 20 mℓ of titanium tetrachloride and 30 mℓ of toluene to prepare a mixed solution. To the mixed solution was added a suspension of 10 g of spherical diethoxymagnesium particles, 50 mℓ of toluene, and 3.6 mℓ of di-n-butyl phthalate, and the mixture was heated to 90°C, at which it was allowed to react for 1 hour with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 110°C, at which it was allowed to react for 2 hours while stirring. After completion of the reaction, the reaction mixture was washed ten 100 mℓ portions of n-heptane at 40°C to obtain a solid catalyst component. The solid content of the solid catalyst component, separated by solid-liquid separation, was found to have a titanium content of 2.87%.

Preparation of Catalyst System and Polymerization:

Propylene was polymerized in the same manner as in Example 2, except for using the above-prepared solid catalyst component. The reaction results are shown in Table 2.

EXAMPLE 5

Preparation of Solid Catalyst Component:

In a 200 mℓ-volume round flask equipped with a stirrer having been thoroughly purged with nitrogen gas were charged 10 g of diethoxymagnesium and 80 mℓ of toluene to prepare a suspension. To the suspension was added 20 mℓ of titanium tetrachloride, and the mixture was heated to 60°C, at which 1.0 mℓ of diethyl phthalate was added. The mixture was further heated up to 110°C, at which 2.5 mℓ of di-iso-octyl phthalate was added thereto. The mixture was further heated to 112°C, at which the mixture was allowed to react for 1.5 hours with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 100°C, and it was allowed to react at that temperature for 2 hours while stirring. After completion of the reaction, the reaction mixture was washed with ten 100 mℓ portions of n-heptane at 40°C to obtain a solid catalyst component. The solid content of the solid catalyst component, separated by solid-liquid separation, was found to have a titanium content of 2.74%.

Preparation of Catalyst System and Polymerization:

Propylene was polymerized in the same manner as in Example 2, except for using the above-prepared solid catalyst component. The reaction results are shown in Table 2.

EXAMPLE 6

Preparation of Solid Catalyst Component:

In a 200 mℓ-volume round flask equipped with a stirrer having been thoroughly purged with nitrogen gas were charged 10 g of diethoxymagnesium and 80 mℓ of toluene to prepare a suspension. To the suspension was added 20 mℓ of titanium tetrachloride, and the mixture was heated to 62°C, at which 1.0 mℓ of diethyl phthalate was added. The mixture was heated up to 110°C, at which 4.0 mℓ of di-iso-octyl phthalate was added thereto. The mixture was further heated to 112°C, at which the mixture was allowed to react for 1.5 hours with stirring. After completion of the reaction, the reaction mixture was washed with two 100 mℓ portions of toluene at 90°C, and 20 mℓ of titanium tetrachloride and 80 mℓ of toluene were added thereto. The mixture was heated to 100°C, and it was allowed to react at that temperature for 2 hours while stirring. After completion of the reaction, the reaction mixture was washed with ten 100 mℓ portions of n-heptane at 40°C to obtain a solid catalyst component. The solid content of the solid catalyst component, separated by solid-liquid separation, was found to have a titanium content of 2.17%.

Preparation of Catalyst System and Polymerization:

Propylene was polymerized in the same manner as in Example 2, except for using the above-prepared solid catalyst component. The reaction results are shown in Table 2.

COMPARATIVE EXAMPLE 1

Propylene was polymerized in the same manner as in Example 3, except for replacing cyclohexylcyclopentyldimethoxysilane with phenyltriethoxysilane. The reaction results are shown in Table 2.

COMPARATIVE EXAMPLE 2

Propylene was polymerized in the same manner as in Example 3, except for replacing cyclohexylcyclopentyldimethoxysilane with cyclohexylmethyldimethoxysilane. The reaction results are shown in Table 2.

COMPARATIVE EXAMPLE 3

Propylene was polymerized in the same manner as in Example 3, except for replacing cyclohexylcyclopentyldimethoxysilane with dicyclopentyldimethoxysilane. The reaction results are shown in Table 2.

EXAMPLE 7

Preparation of Solid Catalyst Component:

In a 200 mℓ-volume round flask equipped with a stirrer having been thoroughly purged with nitrogen gas were charged 7.14 g of anhydrous magnesium chloride, 37.5 mℓ of decane and 35.1 mℓ of 2-ethylhexyl alcohol, and the resulting mixture was heated at 130°C for 2 hours to obtain a uniform solution. Then 1.67 g of phthalic anhydride was added thereto, followed by stirring at 130°C for one hour. The thus obtained uniform solution was cooled to room temperature and was dropwise added, over one hour, to 200 mℓ of titanium tetrachloride which had been cooled at -20°C. After addition of the solution, the temperature of the resulting solution was increased to 110°C over 4 hours, at which 5.03 mℓ of diisobutyl terephthalate was further added to the solution, and the resulting solution was then stirred for 2 hours to continue the reaction at 110°C. The hot reaction mixture was subjected to filtration to thereby obtain a solid product which was then dispersed in 275 mℓ of titanium tetrachloride and allowed to stand at 110°C for 2 hours. Thereafter, a solid product was separated again from the dispersion by filtration while the dispersion was hot, and the solid product was washed with decane and heptane at 110°C to obtain a solid catalyst component. The solid content of the solid catalyst component, separated by solid-liquid separation, was found to have a titanium content of 2.06 %.

Preparation of Catalyst System and Polymerization:

Propylene was polymerized in the same manner as in Example 2, except for using the above-prepared solid catalyst component. The reaction results are shown in Table 2.

EXAMPLE 8

Preparation of Solid Catalyst Component:

In a 250 mℓ-volume round flask equipped with a stirrer having been thoroughly purged with nitrogen gas was charged a solution of 1.4 mℓ of titanium tetrachloride dissolved in 74 mℓ of chlorobenzene, and 3.6 mℓ of diisobutyl phthalate and 11.8 g of diethoxymagnesium were subsequently added thereto. To the resulting solution was further added a solution of 94 mℓ of titanium tetrachloride dissolved in 24 mℓ of chlorobenzene. The addition of these compounds and the solution was conducted at a temperature of 20 to 25 °C. The resulting mixture was heated at 110 °C with stirring for one hour, followed by filtration while the mixture was hot. The thus obtained solid product was added to a solution of 94 mℓ of titanium tetrachloride dissolved in 24 mℓ of chlorobenzene to form a slurry at room temperature. Then, a solution obtained by dissolving 0.9 g of phthaloyl dichloride in 74 mℓ of chlorobenzene was added to the slurry at room temperature, followed by heating at 110 °C with stirring for 30 minutes. The resulting mixture was filtered while it was hot, whereby a solid product was obtained.

To the thus obtained solid product was added, at room temperature, a solution of 94 mℓ of titanium tetrachloride dissolved in 24 ml of chlorobenzene to thereby form a slurry. 74 mℓ of chlorobenzene was further added, at room temperature, to the slurry which was then heated at 110 °C with stirring for 30 minutes. The resulting mixture was filtered while it was hot, whereby a solid product was obtained. Using the thus obtained solid product, the above procedure was repeated again to obtain a solid product, which was then washed 10 times with 100 mℓ of heptane at 25 °C. Thus, a solid catalyst component was obtained. The solid content thereof, separated by solid-liquid separation, was found to have a titanium content of 2.63 %.

Preparation of Catalyst system and Polymerization:

Propylene was polymerized in the same manner as in Example 2, except for using the above-prepared solid catalyst component. The reaction results are shown in Table 2.

COMPARATIVE EXAMPLE 4

Propylene was polymerized in the same manner as in Example 7, except for replacing cyclohexylcyclopentyldimethoxysilane with cyclohexylmethyldimethoxysilane. The reaction results are shown in Table 2.

COMPARATIVE EXAMPLE 5

Propylene was polymerized in the same manner as in Example 8, except for replacing cyclohexylcyclopentyldimethoxysilane with cyclohexylmethyldimethoxysilane. The reaction results are shown in Table 2.

TABLE 2

| Example No. | Weight of Polymer Produced (g) | n-Heptane Insoluble Content (g) | Polymerization Activity (g/g-cat.) | Yield of Total Crystalline Polymer (%) | MI (g/10 min) | Molecular Weight Distribution |
|---|---|---|---|---|---|---|
| Example 3 | 306.4 | 302.3 | 28,200 | 98.7 | 5.0 | 7.0 |
| Example 4 | 339.5 | 334.4 | 30,800 | 98.5 | 3.0 | 6.5 |
| Example 5 | 293.1 | 289.0 | 25,500 | 98.6 | 3.6 | 7.1 |
| Example 6 | 349.1 | 343.2 | 23,900 | 98.3 | 3.6 | 7.1 |
| Example 7 | 177.1 | 173.9 | 23,100 | 98.2 | 4.5 | 6.5 |
| Example 8 | 217.1 | 215.6 | 36,200 | 99.3 | 3.7 | 6.4 |
| Comp. Example 1 | 220.7 | 217.6 | 20,300 | 98.6 | 10.0 | 5.2 |
| Comp. Example 2 | 322.7 | 317.5 | 29,700 | 98.4 | 5.0 | 5.4 |
| Comp. Example 3 | 385.7 | 380.7 | 35,500 | 98.7 | 2.5 | 4.9 |
| Comp. Example 4 | 192.3 | 188.8 | 25,100 | 98.2 | 5.2 | 5.2 |
| Comp. Example 5 | 215.9 | 211.4 | 36,000 | 97.9 | 5.0 | 5.1 |

It is seen from the Examples that polymerization of an olefin in the presence of the catalyst comprising the asymmetric organosilicon compound containing a cyclohexyl group and a cyclopentyl group of the present inveniton provides an olefin polymer having high stereoregularity and broad molecular weight distribution in high yield.

When an olefin is polymerized in the presence of a catalyst comprising the organosilicon compound of the

present invention, a polymer having a broad molecular weight distribution is obtained in high yield. These functions bring about the effect of significantly improving not only the mechanical strength of polypropylene, such as rigidity, i. e., flexural modulus, and impact resistance, but also the physical strength thereof, such as heat resistance. Since the polypropylene thus produced has a broad molecular weight distribution, it also has greatly improved moldability. Thus, the present invention is capable of advantageously providing polypropylene usable in a wide range of applications.

## Claims

1. An organosilicon compound represented by formula (I)

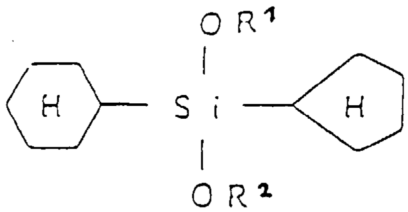

(I)

wherein $R^1$ and $R^2$, which may be the same or different, each represents an alkyl group having 1 to 3 carbon atoms, and the cyclohexyl group and the cyclopentyl group may be substituted.

2. A Ziegler-Natta catalyst for olefin polymerization, containing as an external and/or internal electron donor ingredient the organosilicon compound as claimed in claim 1.

3. The catalyst as claimed in claim 2, comprising (A) a solid catalyst component essentially containing magnesium, titanium, an electron donor compound, and a halogen which is prepared by bringing a magnesium compound, a titanium halide compound, and an electron donor compound into contact, (B) an organoaluminum compound, and (C) the organosilicon compound as claimed in claim 1.

4. The organosilicon compound as claimed in claim 1, which is cyclohexylcyclopentyldimethoxysilane, cyclohexylcyclopentyldiethoxysilane, cyclohexylcyclopentyldi-n-propoxysilane, or cyclohexylcyclopentyldiisopropoxysilane.

5. A process for polymerizing an olefin, comprising homo- or copolymerizing an olefin in the presence of the catalyst as claimed in claim 3.

## Patentansprüche

1. Organosiliciumverbindung, dargestellt durch die Formel (I)

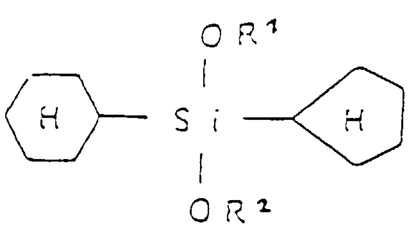

(I)

worin $R^1$ und $R^2$, die gleich oder verschieden sein können, jeweils eine Alkylgruppe mit 1 bis 3 Kohlenstoffatomen bedeuten und die Cyclohexylgruppe und die Cyclopentylgruppe substituiert sein können.

2. Ziegler-Natta-Katalysator für die Polymerisation von Olefinen, enthaltend als externen und/oder internen Elektronendonorbestandteil die Organosiliciumverbindung nach Anspruch 1.

3. Katalysator nach Anspruch 2, umfassend (A) einen festen Katalysatorbestandteil, enthaltend im wesentlichen Magnesium, Titan, eine Elektronendonorverbindung und ein Halogen, hergestellt durch Inkontaktbringen einer Magnesiumverbindung, einer Titanhalogenidverbindung und einer Elektronendonorverbindung, (B) eine Organoaluminiumverbindung und (C) die Organosiliciumverbindung nach Anspruch 1.

4. Organosiliciumverbindung nach Anspruch 1, welche Cyclohexylcyclopentyldimethoxysilan, Cyclohexylcyclopentyldiethoxysilan, Cyclohexylcyclopentyldi-n-propoxysilan oder Cyclohexylcyclopentyldiisopropoxysilan ist.

5. Verfahren zur Polymerisation eines Olefins, umfassend das Homo- oder Copolymerisieren eines Olefins in Gegenwart des Katalysators nach Anspruch 3.

## Revendications

1. Composé organique du silicium représenté par la formule (I) :

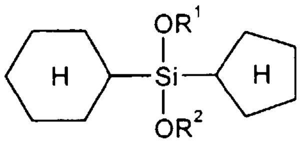

(I)

dans laquelle chacun de $R^1$ et $R^2$, qui peuvent être identiques ou différents, représente un groupe alkyle ayant de 1 à 3 atomes de carbone, et le groupe cyclohexyle et le groupe cyclopentyle peuvent être substitués.

2. Catalyseur du type Ziegler-Natta pour la polymérisation d'oléfines, contenant, en tant qu'ingrédient donneur d'électrons externe et/ou interne, le composé organique du silicium selon la revendication 1.

3. Catalyseur selon la revendication 2, comprenant (A) un composant de catalyseur solide contenànt principalement du magnésium, du titane, un composé donneur d'électrons, et un halogène, qui est préparé par mise en contact d'un composé du magnésium, d'un composé halogénure de titane, et d'un composé donneur d'électrons, (B) un composé organique de l'aluminium, et (C) le composé organique du silicium selon la revendication 1.

4. Composé organique du silicium selon la revendication 1, qui est le cyclohexylcyclopentyldiméthoxysilane, le cyclohexylcyclopentyldiéthoxysilane, le cyclohexylcyclopentyldi-n-propoxysilane, ou le cyclohexylcyclopentyldiisopropoxysilane.

5. Procédé pour polymériser une oléfine, comprenant l'homopolymérisation ou la copolymérisation d'une oléfine en présence du catalyseur selon la revendication 3.

FIG. 1

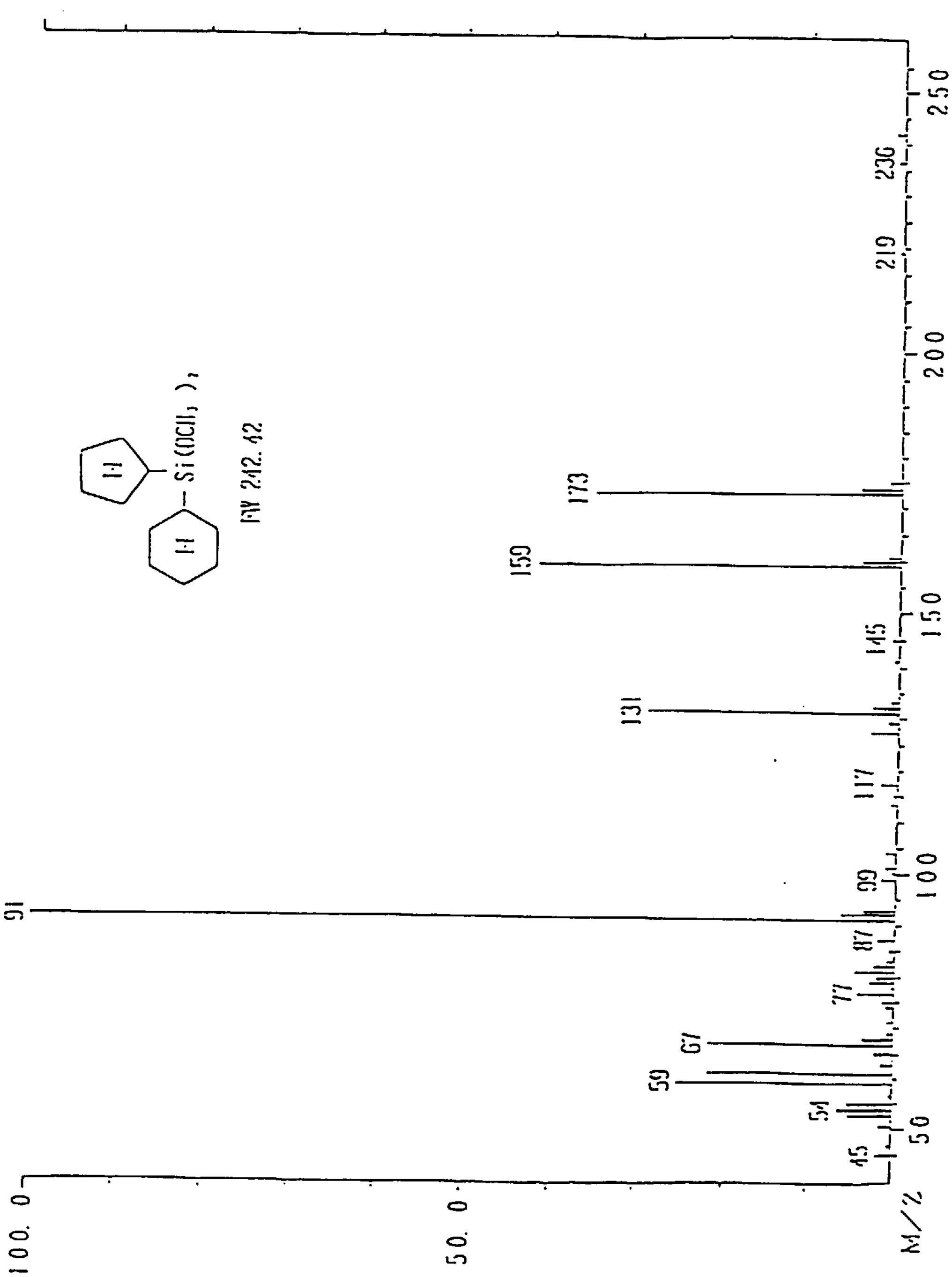
100.0
50.0
M/Z
45
50
55
59
67
77
87
91
99
100
117
131
145
150
159
173
200
219
236
250
MW 242.42

FIG. 2

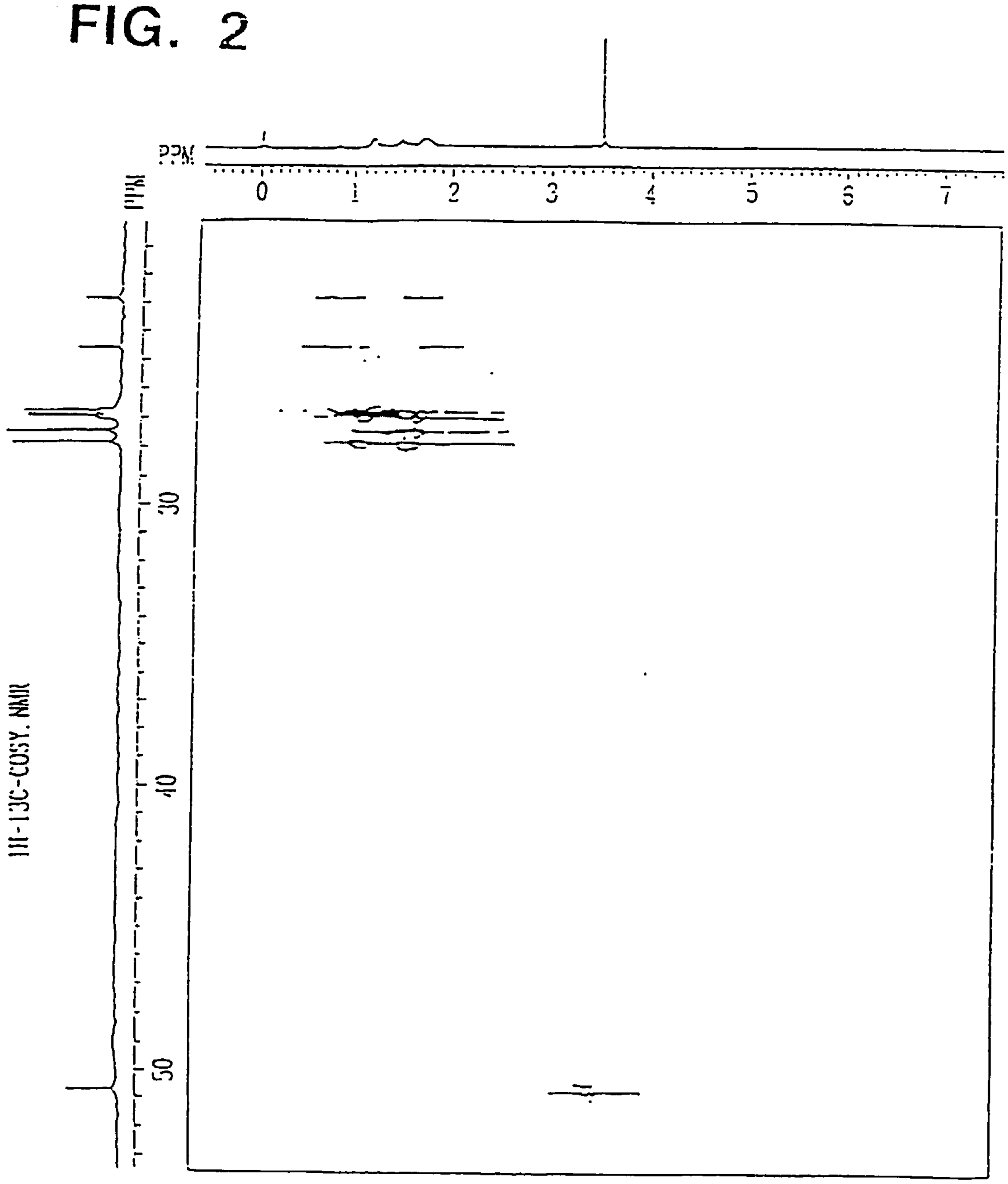

FIG. 3

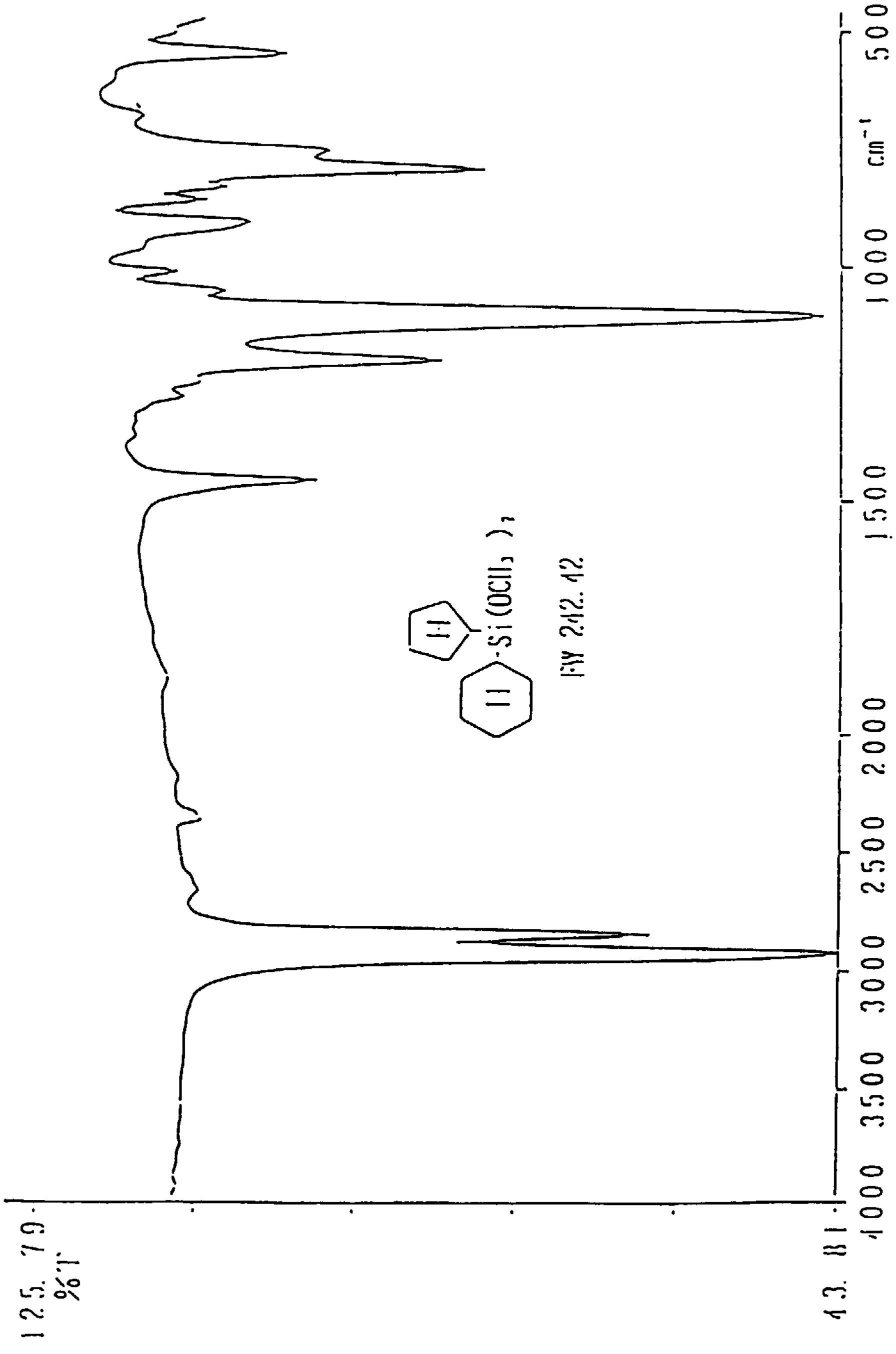
125.79
%T
43.81
4000
3500
3000
2500
2000
1500
1000
500
cm⁻¹
MW 242.42